# EUROPÄISCHE PATENTANMELDUNG

(11) **EP 1 630 018 A2**
(43) Veröffentlichungstag der Anmeldung: **01.03.2006**
(21) Anmeldenummer: 05012402.3
(22) Anmeldetag: 09.06.2005
(51) Int. Cl.: B60J 5/04, E05D 15/30

(54) **Schwenktür für Fahrzeuge, z. B. für Busse und schienengebundene Fahrzeuge**

(30) Priorität: 31.08.2004 DE 202004013588 U
(71) Anmelder: HÜBNER GmbH, 34123 Kassel (DE)
(72) Erfinder: Paul, Oliver, 34266 Niestetal (DE)
(74) Vertreter: WALTHER, WALTHER & HINZ Patentanwälte - European Patent Attorneys

(57) **Zusammenfassung**

Gegenstand der vorliegenden Erfindung ist eine Schwenktür für Fahrzeuge, z. B. für Busse und schienengebundene Fahrzeuge, wobei der mindestens eine Türflügel der Schwenktür an einer Drehsäule (10) gelagert ist, wobei die Drehsäule (10) an ihrem einen Ende auf dem Boden des Fahrzeugs im Bereich des Einstiegs oder auf der Einstiegsstufe durch ein Drehsäulenlager gelagert ist, wobei das Drehsäulenlager einen Lagerbock (3) umfasst, wobei der Lagerbock (3) des Drehsäulenlagers integraler Bestandteil des Bodens oder der Einstiegsstufe ist.

## Beschreibung

Die Erfindung betrifft eine Schwenktür für Fahrzeuge, z. B. für Busse und schienengebundene Fahrzeuge, wobei der mindestens eine Flügel der Schwenktür an einer Drehsäule gelagert ist, wobei die Drehsäule an ihrem einen Ende auf dem Boden des Fahrzeugs im Bereich des Einstiegs oder auf der Einstiegsstufe durch ein Drehsäulenlager gelagert ist.

Schwenktüren für Fahrzeuge sind z. B. als Außenschwenktüren, Innenschwenktüren oder auch als Schwenkschiebetüren bekannt. Allen bekannten Schwenktüren ist gemein, dass diese durch eine Drehsäule schwenkbar gehalten sind.

Gegenstand der Erfindung ist nunmehr die Lagerung der Drehsäule; hierbei ist zur Lagerung der Drehsäule nach einem bekannten Stand der Technik vorgesehen, dass in dem Portal der Schwenktür, also am Wagenkasten, unmittelbar über dem Boden bzw. der Einstiegsstufe ein Arm angeordnet ist, der einen Lagerbock zur Aufnahme der Drehsäule aufweist. Nachteilig hierbei ist, dass die gewählte Konstruktion relativ instabil ist, und auch eine aufwendige Montage bedingt. Dies deshalb, weil der Arm so genau angeordnet sein muss, dass ganz bestimmte Toleranzmaße eingehalten werden.

Aus dem Stand der Technik ist ebenfalls bekannt, den Lagerbock einer Lagerung für eine Drehsäule auf dem Boden oder der Einstiegsstufe anzuschrauben. Eine solche Konstruktion ist zwar stabil, hat jedoch den Nachteil, dass in den Boden bzw. die Einstiegsstufe Löcher eingebracht werden müssen. Nun ist bekannt, dass der Boden eines Busses aus Sperrholz besteht. Durch die Einbringung von Bohrungen in den Boden besteht nunmehr die Gefahr des Eindringens von Feuchtigkeit, mit der Folge, dass der Boden durch die eindringende Feuchtigkeit Schaden nimmt. Darüber hinaus ist auch hier darauf zu achten, dass vorgegebene Toleranzen unbedingt eingehalten werden, so dass auch hier die Montage sehr aufwendig ist.

Der Erfindung liegt daher die Aufgabe zugrunde, eine Drehsäulenlagerung bereitzustellen, die eine einfache Montage ermöglicht, und bei der darüber hinaus das Einbringen von Bohrungen in den Boden bzw. die Einstiegsstufe vermieden werden kann.

Die Aufgabe wird erfindungsgemäß dadurch gelöst, dass das Drehsäulenlager einen Lagerbock umfasst, wobei der Lagerbock des Drehsäulenlagers integraler Bestandteil des Bodens oder der Einstiegsstufe ist. Insbesondere bei der Ausbildung der Einstiegsstufe aus Kunststoff bzw. des Einsatzes einer Kunststoffplatte in den Boden im Bereich des Einstieges besteht somit die Möglichkeit, den Lagerbock unmittelbar mit in die Kunststoffplatte einzuspritzen. Hierdurch wird sowohl die Montage erleichtert, da keine Bohrungen mehr in den Boden oder die Stufe angebracht werden müssen, was auch verhindert, dass Wasser in den Boden eintritt, was ebenfalls von Nachteil ist, wenn die Kunststoffplatte über einer Holzplatte des Bodens liegt.

Des Weiteren ist im Einzelnen vorgesehen, dass der Lagerbock aus einem festen Kunststoff, z. B. Polyamid besteht. Der Lagerbock umfasst einen Lagerkörper, der zentrisch einen Führungsdorn aufweist. Der Lagerkörper ist auf seiner Oberseite um den Führungsdorn ballig ausgebildet, wobei korrespondierend hierzu das Drehsäulenlager eine Lagerhülse umfasst, die an der Drehsäule befestigt ist, und die auf ihrer dem Lagerbock zugewandten Seite korrespondierend zu der Oberseite des Lagerkörpers ebenfalls ballig ausgebildet ist. Um die Lagerfläche zu vergrößern und somit den Verschleiß zu vermindern, ist insbesondere vorgesehen, dass die Lagerhülse an ihrem dem Lagerbock zugewandten Ende einen Bund aufweist.

Der Lagerdorn weist nach einem weiteren Merkmal der Erfindung Mittel zur Fixierung der Drehsäule auf dem Lagerbock auf. Hierzu kann im Einzelnen vorgesehen sein, dass der Lagerdorn eine umlaufende Nut aufweist, in die eine auf der Zylindermantelfläche der Drehsäule angeordnete Schraube mit ihrem Ende hineinragt, und so ein Abheben der Drehsäule vom Lagerbock verhindert wird.

Des Weiteren ist vorgesehen, dass die Kunststoffplatte auf ihrer Unterseite eine Metallplatte zur Verstärkung aufweist.

Anhand der Zeichnungen wird die Erfindung nachstehend beispielhaft näher erläutert.
- Fig. 1: zeigt schematisch die Einstiegsstufe mit dem darin eingespritzten Lagerbock sowie angedeuteter Drehsäule;
- Fig. 2: zeigt die Drehsäulenlagerung im Einzelnen.

Die insgesamt mit 1 bezeichnete Einstiegsstufe besitzt zu beiden Seiten den Lagerbock 3 zur Aufnahme der mit 20 angedeuteten Drehsäule. Die Eintrittsstufe 1 ist Bestandteil beispielsweise des Bodens eines Busses, der hier jedoch nicht weiter dargestellt ist.

Der Lagerbock 3 ist in die Einstiegsstufe 1 aus Kunststoff eingespritzt, d. h. der Lagerbock ist integraler Bestandteil der Einstiegsstufe bzw. auch des Bodens, wenn eine gesonderte Einstiegsstufe nicht vorgesehen ist.

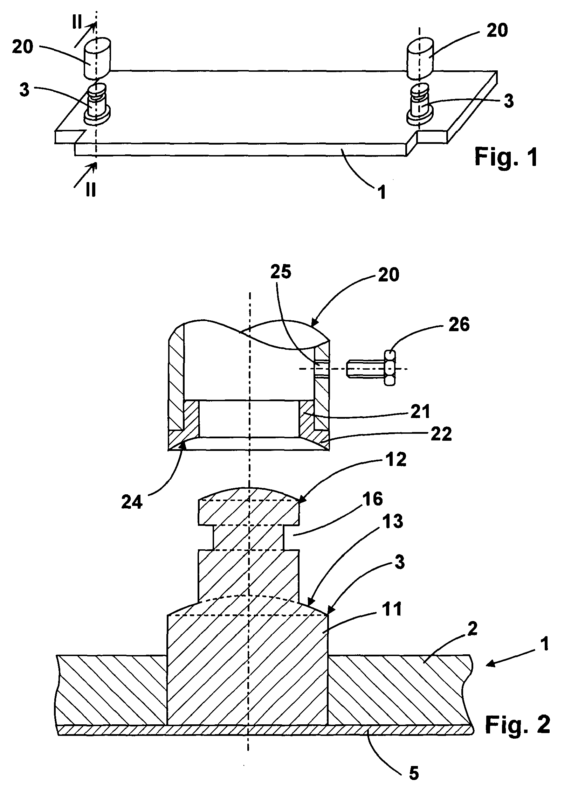

Die Ausbildung des Drehsäulenlagers mit Lagerbock und die in der Drehsäule angeordnete Lagerhülse ergibt sich im Einzelnen aus Fig. 2. Die insgesamt mit 1 bezeichnete Einstiegsstufe umfasst eine Kunststoffplatte 2, die durch eine Metallplatte 5 verstärkt ist. Die Kunststoffplatte 2 ist auf der Metallplatte aufgespritzt, wobei der mit 3 bezeichnete Lagerbock in die Kunststoffplatte mit eingespritzt ist. Der Lagerbock 3 umfasst den mit 11 bezeichneten Lagerkörper, sowie den zentrisch sich daran anschließenden Führungsdorn 12. Der Führungsdorn 12 weist einen geringeren Durchmesser auf, als der Lagerkörper 11, so dass sich in Bezug auf den Lagerkörper 11 ein umlaufender Rand 13 ergibt. Der Rand 13 ist ballig ausgebildet.

Die mit 20 bezeichnete Drehsäule, die sich vom Grundsatz her als ein rohrförmiges Teil darstellt, weist auf ihrer dem Lagerbock 3 zugewandten Seite eine Lagerhülse 21 auf. Die Lagerhülse 21 umfasst einen umlaufenden Bund 22 oder Absatz. Die Lagerhülse 21 ist nun auf ihrer dem Lagerbock 3 zugewandten Seite ebenfalls ballig (Pfeil 24) ausgebildet und ist somit in der Lage, kleinere Schwenkbewegungen auszugleichen. Insofern ist der Führungsdorn 12 auch mit leichtem radialen Spiel durch die Lagerhülse 21 aufgenommen.

Der Führungsdorn 12 besitzt darüber hinaus eine umlaufende Nut 16, wobei korrespondierend hierzu die mit 1 bezeichnete Drehsäule eine Gewindebohrung 25 zur Aufnahme der Schraube 26 besitzt, durch die die Drehsäule auf dem Lagerbock fixiert werden kann, indem die Schraube 26 in die Nut 16 hineinragt.

## Patentansprüche

1. Schwenktür für Fahrzeuge, z. B. für Busse und schienengebundene Fahrzeuge, wobei der mindestens eine Türflügel der Schwenktür an einer Drehsäule (10) gelagert ist, wobei die Drehsäule (10) an ihrem einen Ende auf dem Boden des Fahrzeugs im Bereich des Einstiegs oder auf der Einstiegsstufe durch ein Drehsäulenlager gelagert ist,
**dadurch gekennzeichnet,**
**dass** das Drehsäulenlager einen Lagerbock (3) umfasst, wobei der Lagerbock (3) des Drehsäulenlagers integraler Bestandteil des Bodens oder der Einstiegsstufe ist.

2. Schwenktür nach Anspruch 1,
**dadurch gekennzeichnet,**
**dass** der Boden (1) im Bereich des Einstiegs oder die Einstiegsstufe (1) eine Kunststoffplatte (2) aufweist, wobei der Lagerbock (3) in die Kunststoffplatte (2) eingespritzt ist.

3. Schwenktür nach Anspruch 1,
**dadurch gekennzeichnet,**
**dass** der Lagerbock (3) aus hochfestem Kunststoff, z. B. Polyamid besteht.

4. Schwenktür nach Anspruch 3,
**dadurch gekennzeichnet,**
**dass** der Lagerbock (3) einen Lagerkörper (11) aufweist, der zentrisch einen Führungsdorn (12) aufweist.

5. Schwenktür nach Anspruch 4,
**dadurch gekennzeichnet,**
**dass** der Lagerkörper (11) auf seiner Oberseite (13) ballig ausgebildet ist.

6. Schwenktür nach Anspruch 1
**dadurch gekennzeichnet,**
**dass** das Drehsäulenlager eine Lagerhülse (21) umfasst, die an der Drehsäule (20) befestigt ist.

7. Schwenktür nach einem oder mehreren der voranstehenden Ansprüche,
**dadurch gekennzeichnet,**
**dass** die Lagerhülse (21) auf ihrer dem Lagerbock (3) zugewandten Seite korrespondierend zu der Oberseite (13) des Lagerbocks (3) ebenfalls ballig (bei 24) ausgebildet ist.

8. Schwenktür nach einem oder mehreren der voranstehenden Ansprüche,
**dadurch gekennzeichnet,**
**dass** die Lagerhülse (21) an ihrem dem Lagerbock (3) zugewandten Ende einen Bund (22) aufweist, um die Lagerfläche zu vergrößern.

9. Schwenktür nach einem oder mehreren der voranstehenden Ansprüche,
**dadurch gekennzeichnet,**
**dass** der Führungsdorn (12) Mittel (16, 26) zur Fixierung der Drehsäule (20) auf dem Lagerbock (3) aufweist.

10. Schwenktür nach Anspruch 2,
**dadurch gekennzeichnet,**
**dass** die Kunststoffplatte (2) auf ihrer Unterseite eine Metallplatte (5) zur Verstärkung aufweist.
